# EUROPEAN PATENT SPECIFICATION

(11) **EP 4 169 477 B1**
(45) Date of publication and mention of the grant of the patent: **24.06.2026**
(21) Application number: 22202852.4
(22) Date of filing: 20.10.2022
(51) Int. Cl.: A61C 8/00

(54) **METHOD FOR GENERATING AN ANGULATED SCREW CHANNEL FOR DENTAL ABUTMENT AND DEVICE AND NON-TRANSITORY COMPUTER-READABLE STORAGE MEDIUM FOR IMPLEMENTING SAID METHOD**
VERFAHREN ZUR ERZEUGUNG EINES WINKELFÖRMIGEN SCHRAUBENKANALS FÜR EIN IMPLANTATPFOSTEN SOWIE VORRICHTUNG UND NICHT-TRANSIENTES COMPUTERLESBARES SPEICHERMEDIUM ZUR UMSETZUNG DIESES VERFAHRENS
PROCÉDÉ DE CRÉATION D'UN CANAL DE VIS ANGULAIRE POUR UNE BUTÉ DENTAIRE ET DISPOSITIF ET SUPPORT DE STOCKAGE NON TRANSITOIRE LISIBLE PAR ORDINATEUR POUR LA MISE EN OEUVRE DUDIT PROCÉDÉ

(30) Priority: 20.10.2021 US 202163270021 P; 30.12.2021 US 202117566365
(43) Date of publication of application: 26.04.2023
(73) Proprietor: Biomet 3I, LLC, Florida 33410 (US)
(72) Inventor: WEITHALER, Werner, 39014 Postal (IT); GEIER, Andreas, 39010 Gargazon (IT)
(74) Representative: Platzöder Patentanwaltsgesellschaft mbH

(56) References cited:
- EP-A1- 3 287 094
- EP-A1- 3 378 434
- US-A1- 2020 289 243

## Description

### CLAIM OF PRIORITY

This application claims the benefit of U.S. Provisional Patent Application Serial No. 63/270,021, filed on October 20, 2021.

### FIELD

The present disclosure is directed to devices and methods for use with dental abutment systems.

### BACKGROUND

Digital dentistry has been developed to help dentists and dental assistants in performing dental procedures. Digital dentistry may include computer-aided dentistry, which may be used to design dental abutments, dental abutment restorations, dental abutment models, surgical guides, and other dental procedure devices. An example of computer-aided dentistry is U.S. Patent No. 8,185,224, which describes manufacturing dental abutment components using scanning and computer-aided design.

Document US2020289243A1 shows a method of manufacturing a dental abutment with an angled screw channel provided with a recess for the screw head in the wall of the angled screw channel. EP3287094A1 and EP3378434A1 show a method of making a dental abutment with an angled screw channel with a vertical portion and an angled portion.

One form of computer-aided dentistry includes selecting a screw channel for a dental abutment. However, existing screw channel solutions typically include an operator selecting a screw channel model from among a number of previously generated screw channel models, then testing the model to verify that a particular dental screw will be able to be inserted through the channel to secure the dental abutment. This guess-and-check method is inefficient, as there is no guarantee that a particular screw channel will be compatible with a given screw, and the screw channel size is often selected to be larger than needed to accommodate a given screw. What is needed is an improved screw channel solution.

The present invention is defined in the claims.

The present invention describes technical solutions to various technical problems facing generation of an angulated screw channel for dental implant. An improved screw channel model may be generated based on various inputs. The inputs include dental abutment parameters such as a screw channel length and a variable height. The inputs also include dental screw parameters associated with a dental screw type, such as a screwhead diameter and a screwhead height. Using these inputs, the improved angulated screw channel model may be generated. By generating a model based on these input parameters, the resulting screw channel model allows the dental screw to be inserted and secured while reducing or minimizing a screw hole size and a screw channel volume.

### BRIEF DESCRIPTION OF THE DRAWINGS

FIG. 1 illustrates four example screw channel forms.
FIGs. 2A-2C illustrate a minimal thickness required around a screw channel.
FIGs. 3A-3B illustrate screw channels.
FIG. 4 illustrates a parallel screw channel form.
FIGs. 5A-5B illustrate long hole benefits.
FIG. 6 illustrates schematic overview of an angulated screw channel and base.
FIG. 7 illustrates a dental abutment crown and base.
FIG. 8 illustrates hexolobular screwdrivers.
FIG. 9 illustrates hex screwdrivers.
FIG. 10 illustrates various dimension screwdrivers.
FIG. 11 illustrates a dental abutment angulated screw channel rotation.
FIG. 12 illustrates a flow chart showing dental screw channel model technique.
FIG. 13 illustrates generally an example of a block diagram of a machine upon which any one or more of the techniques (e.g., methodologies) discussed herein may perform.

### DETAILED DESCRIPTION

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

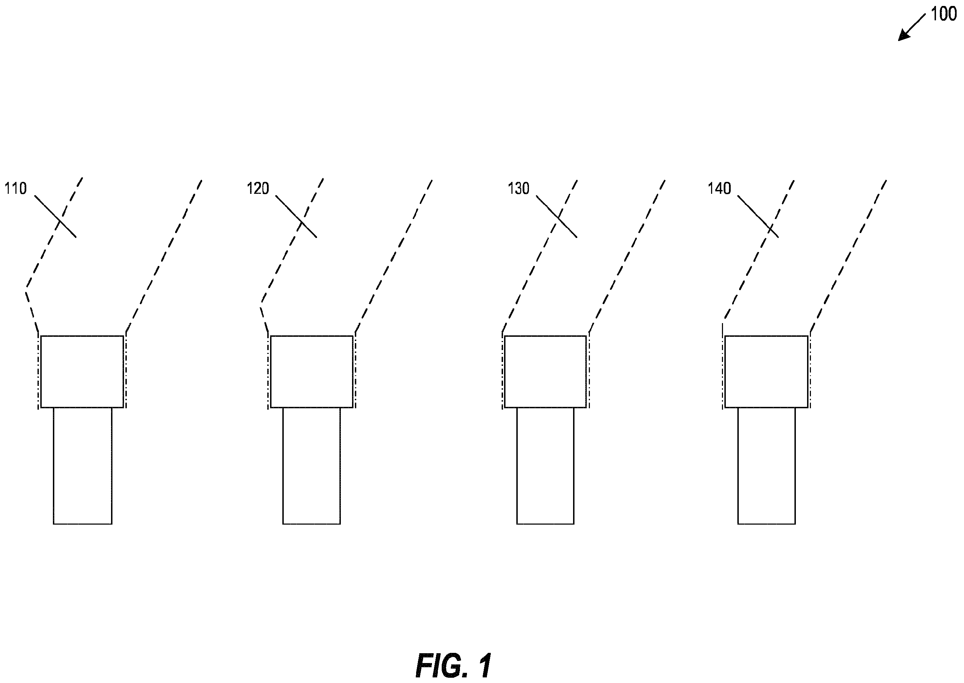

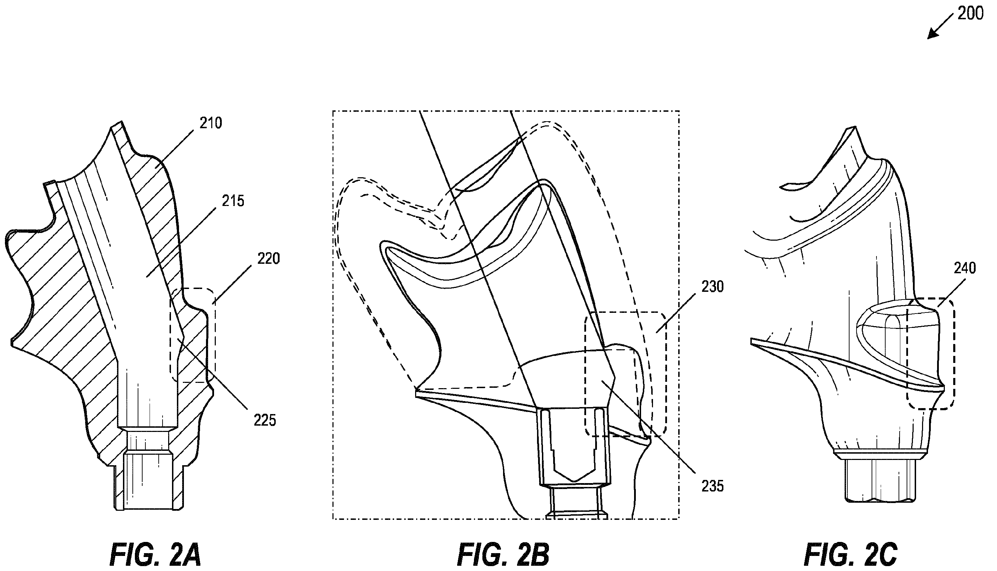

FIG. 1 illustrates four example screw channel forms 100. Each of these screw channel forms 110-140 may be used to provide a screw channel through a dental abutment into a dental implant base. Each of these forms is fixed, and is not varied according to angulation or selection of a specific dental abutment within a computer-aided design (CAD) or computer-aided modeling (CAM) library of dental abutments. These four forms may not cover all requirements. In an example, form 110 may provide the widest screw channel from among the four example screw channel forms, however form 110 may not be big enough for all required geometries or screws. Form 120 may provide a narrower channel than form 110, but both may exhibit unwanted geometries due to minimal thickness requirements shown in FIGs. 2A-2C. Additionally, these four example screw channel forms do not guarantee insertion of the screw to secure the dental abutment.

FIGs. 2A-2C illustrate a minimal thickness required around a screw channel 200. A minimal material thickness may be required around each screw channel, such as to provide sufficient structural strength in the dental abutment. FIG. 2A shows a 2D cross-sectional drawing of a structural safety region 210 surrounding a screw channel 215. The structural safety region 210 includes a protruding dental abutment shelf 220 generated because of the minimal material thickness required to support the dental abutment around the internal angled screw channel negative protrusion 225 (i.e. a recess). Similarly, FIG. 2B shows a 2D cross-sectional drawing that includes a protruding dental abutment shelf 230 generated because of the minimal material thickness required to support the dental abutment around the internal angled screw channel negative protrusion 235 (i.e. a recess). FIG. 2C shows a 3D drawing of protruding dental abutment shelf 240.

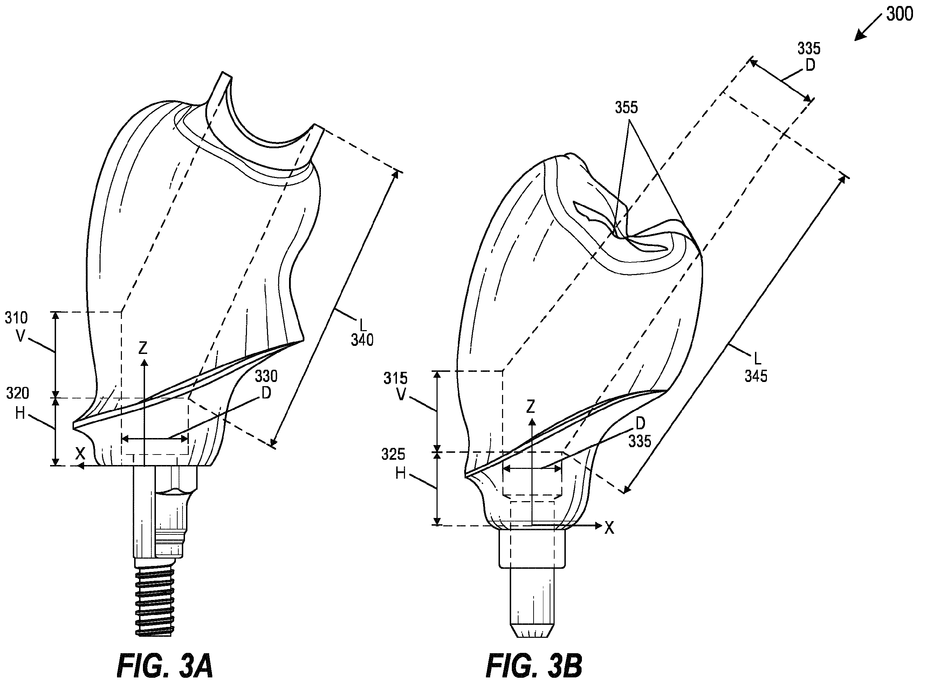

FIGs. 3A-3B illustrate two screw channels 300, including a parallel screw channel form shown in FIG. 3A and a conical screw channel form shown in FIG. 3B. The parallel screw channel shown in FIG. 3A may be defined by various input parameters, including a variable height 310, a screwhead height 320, a screwhead diameter 330, and a screw channel maximum length 340. Similarly, the conical screw channel shown in FIG. 3B may be defined by a variable height 315, a screwhead height 325, a screwhead diameter 335, and a screw channel maximum length 345. As shown in FIG. 3B, the conical variant provides a smaller access hole 355. These screw channels 300 allow for dental screws to be inserted through each of the two screw channels 300 and used to secure a dental abutment.

These screw channels 300 may be generated based on the input parameters, and may be output as dental screw channel model CAD files, such as a stereolithography (STL) files. The output dental screw channel model may include various model parameters to accommodate a dental screw while minimizing the screw channel volume. In an example, each screw channel is open on both ends, has an associated height and diameter, the triangulation of the screw channel is not too rough, there are no open areas or overlapping triangles, and the channel is long enough for screws and screwdrivers. These screw channels 300 may be used with one-piece abutment/bridges from bucks, such as for two-piece abutment/bridges. These screw channels 300 allow for standard dental screws to be inserted through the screw channels 300, and reduce or eliminate the need for special screws or additional fastening devices.

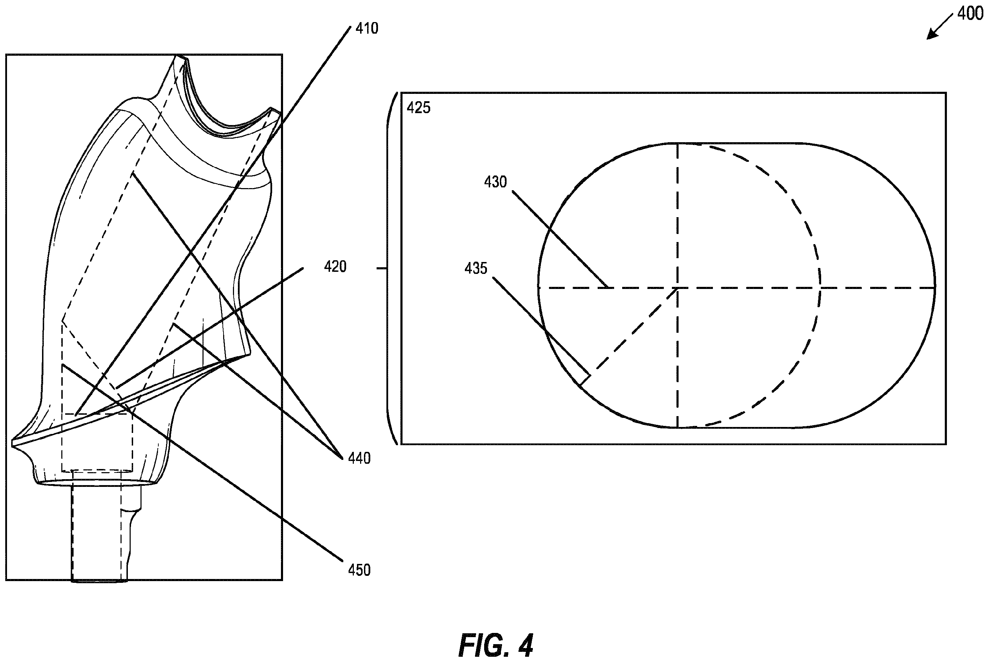

FIG. 4 illustrates a parallel screw channel form 400. The parallel screw channel form 400 may include a start surface 410, which may include a circle whose diameter is based on the screwhead diameter. The screwhead diameter may be an input used by a CAD dental abutment library. As shown in FIG. 4, in relation to the angulation 420, a long hole 425 is created. The long hole 425 may have an associated long hole length 430 and an associated screwhead radius of curvature 435. The long hole radius of curvature 435 may be equal to or based on the screw head radius. The screw channel wall 440 may be substantially or perfectly parallel (e.g., forming a cylindrical shape) with a cross section of the same dimensions as the long hole 425. The parallel screw channel form 400 may have an associated height 450, where the height 450 may be variable and adjustable for each connection and screw to provide the ability to reduce or minimize the size of the long hole 425 and volume of the parallel screw channel form 400.

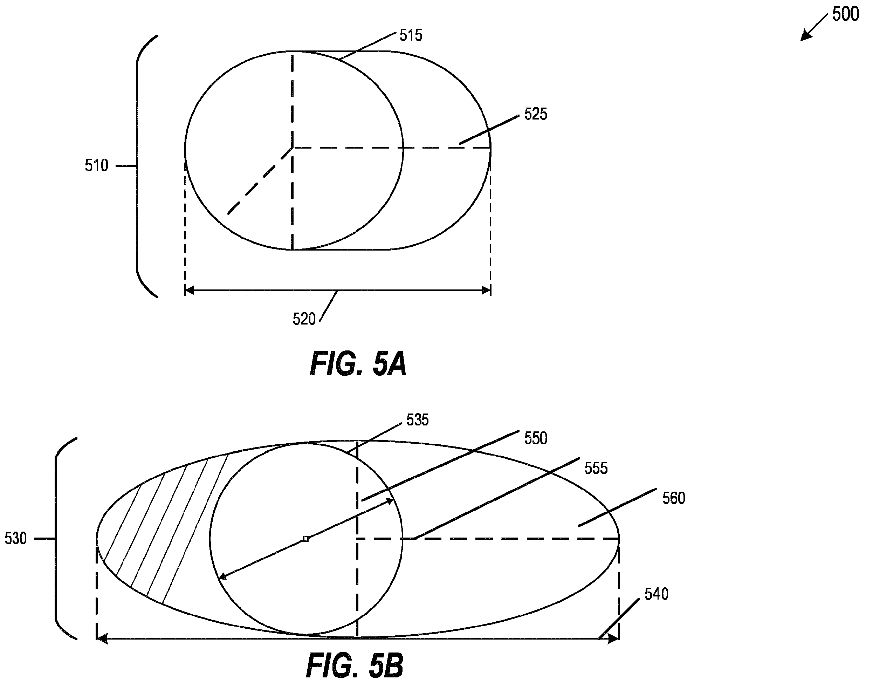

FIGs. 5A-5B illustrate long hole benefits 500. The present improved angulated screw channel includes a long hole 510. The long hole 510 has an associated radius of curvature defined by the screwhead size 515, and has an associated long hole length 520. The geometry of the long hole 510 may be based on the screwhead size 515 translated horizontally for a translation distance 525. The elliptical hole 530 may also be based on a corresponding screwhead size 535 and have an associated elliptical hole length 540. The geometry of the elliptical hole 530 may be based on a geometrically elliptical area whose semi-minor axis 550 is based on accommodating a diameter of the screwhead size 535 and whose semi-major axis 555 is double the elliptical hole length 540. In contrast with the elliptical hole 530, the non-elliptical long hole 510 may be used to provide provides the smallest possible hole that may fit the screw length and screwhead size 515. The elliptical hole 530 requires greater area, which results in more material waste 560 and increases machining complexity.

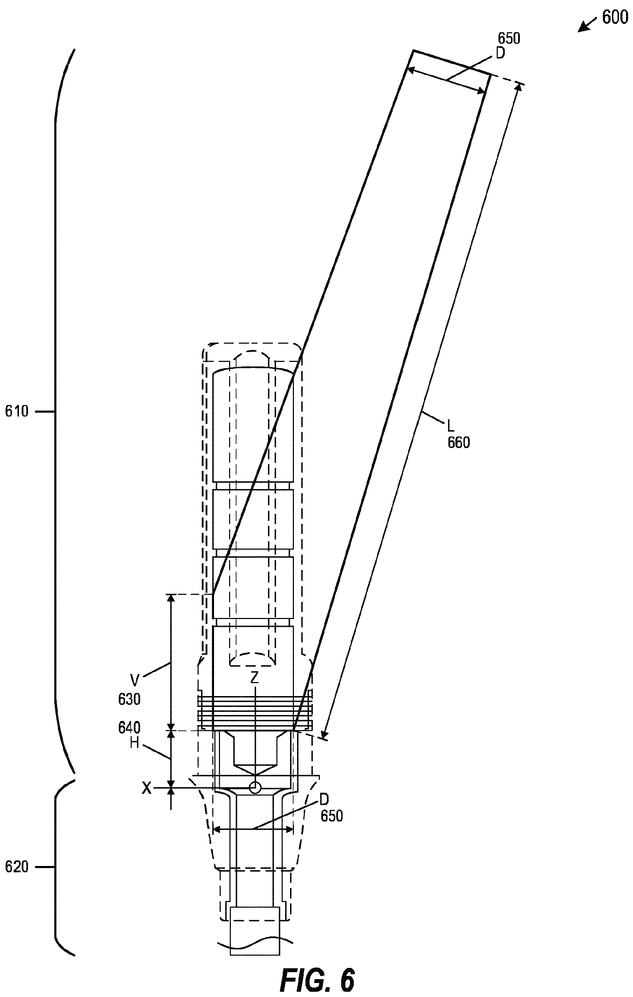

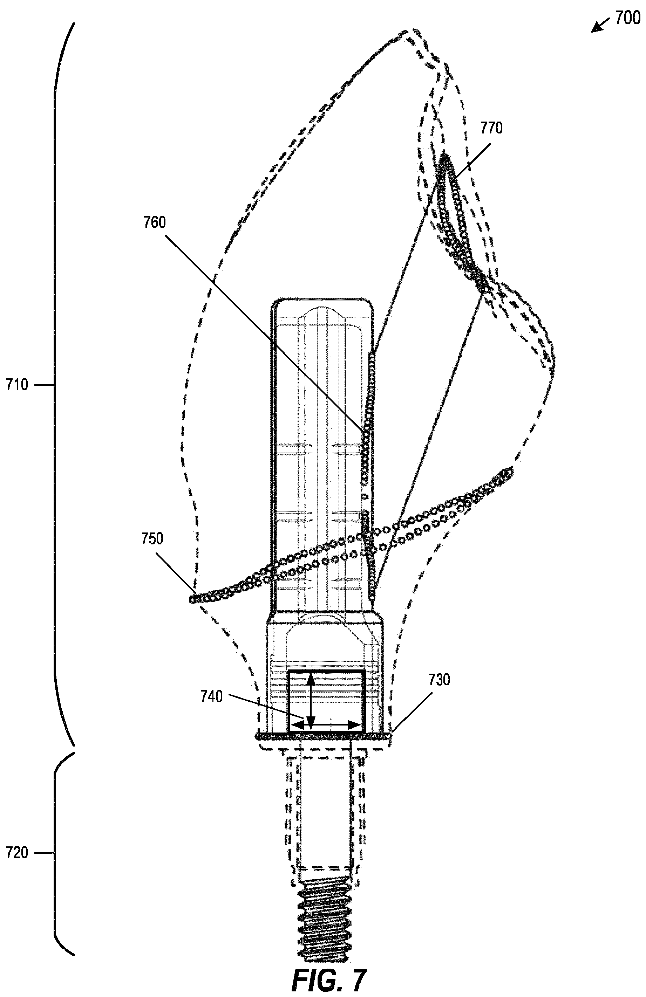

FIG. 6 illustrates schematic overview 600 of an angulated screw channel and base. The dental abutment shown in schematic overview 600 may include an angulated screw channel 610 that is attached to a rigid implant base 620, such as may be used in a two-piece abutment implant or hybrid abutment implant. The schematic overview 600 also includes dimensions that may be used as inputs for the generation of an output conical screw channel model or an output parallel screw channel model. The inputs may include a variable height V 630, a height H 640 defining a distance from origin to end of screwhead angulation start, a screwhead diameter D 650 (e.g., as defined by a dental abutment library), a maximal screw channel length L 660. In addition to these angulated screw channel form dimensions, an input screw channel type may be used to indicate whether the screw channel model to be generated includes a parallel screw channel model or a conical screw channel model. An example output model generated by angulated screw channel form dimensions and the input screw channel type is shown in FIG. 7.

FIG. 7 illustrates a dental abutment 700, including crown 710 and base 720. FIG. 7 further illustrates several three-dimensional (3D) parameters for a screw channel model, such as the abutment base line 730, the height and diameter of the screw head 740, the emergence line 750, the margin screw above angulated bend 760 (e.g., for use in DentalCAD or Exocad), and the screw channel exit 770. A model including these parameters may be output as an STL or other CAD or CAM file. The output file may be displayed to a dental surgeon for review and further editing. The model may be transferred to a robotic dental abutment milling machine for milling the angulated screw channel, to a robotic dental drill for drilling the angulated screw channel, or may be transferred to 3D printer for printing one or more of the crown 710 with screw channel and base 720.

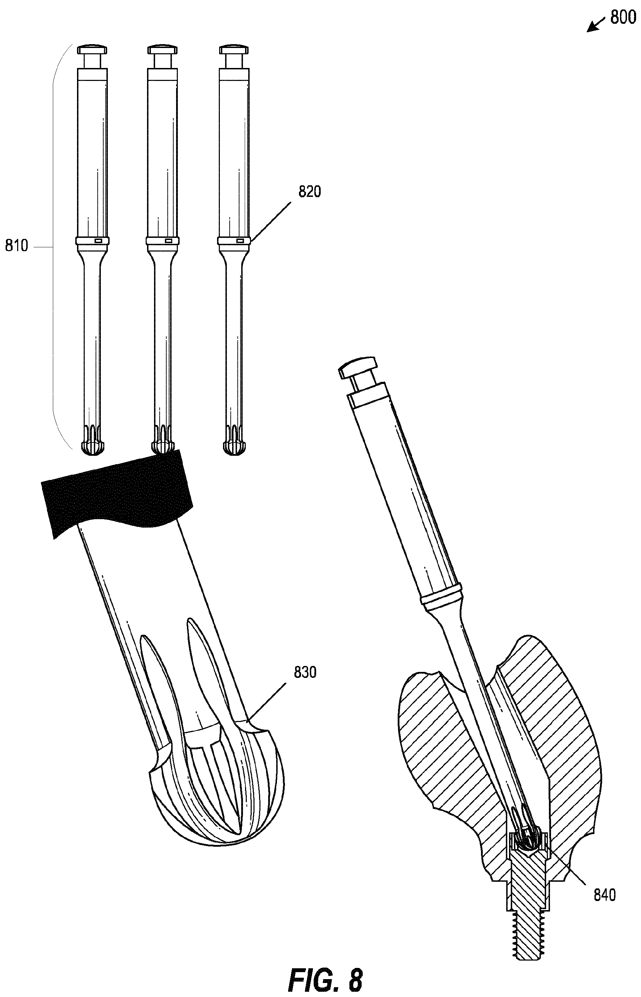

FIG. 8 illustrates hexolobular screwdrivers 800. The hexolobular screwdrivers 800 may be used to install a hexolobular screw through one of the angulated screw channels defined herein. Various screw types (e.g., hexolobular screws, hex screws) may be used based on different screw original equipment manufacturers (OEMs), and each screw type may have an associated screwdriver. A group of hexolobular screwdrivers 810 may each have a different length, diameter, or other geometry for use with different diameter hexolobular screws. Each screwdriver within a group of hexolobular screwdrivers 810 may include a visual indicator 820 (e.g., color coding) to indicate the type of screwdriver. Each of the hexolobular screwdrivers may have a hexolobular head 830 associated with a corresponding hexolobular screw 840.

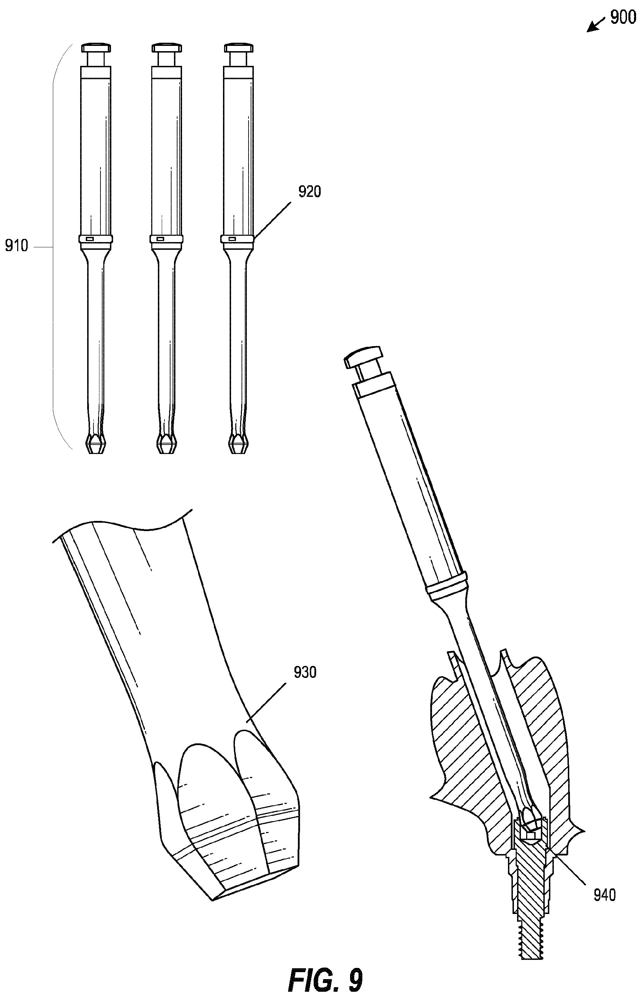

FIG. 9 illustrates hex screwdrivers 900. The hex screwdrivers 900 may be used to install a hex screw through one of the angulated screw channels defined herein. A group of hex screwdrivers 910 may each have a different length, diameter, or other geometry for use with different diameter hex screws. Each screwdriver within a group of hex screwdrivers 910 may include a visual indicator 920 to indicate the type of screwdriver. Each of the hex screwdrivers may have a hex head 930 associated with a corresponding hex screw 940.

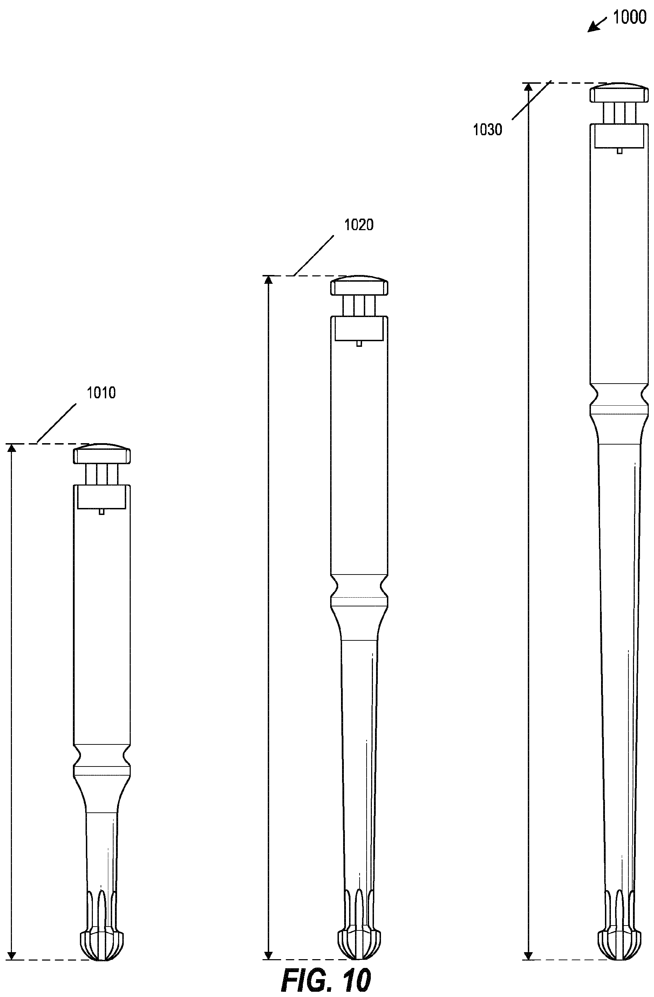

FIG. 10 illustrates various dimension screwdrivers 1000. Each of the hexolobular or hex screwdrivers may have an associated height or length, such as a short driver 1010, medium driver 1020, and long driver 1030. Each of the hexolobular or hex screwdrivers may have an associated alphanumeric identification or other visual indicator, which may provide a visual indication of the length, head size, associated screw type, or other information about screwdrivers 1000.

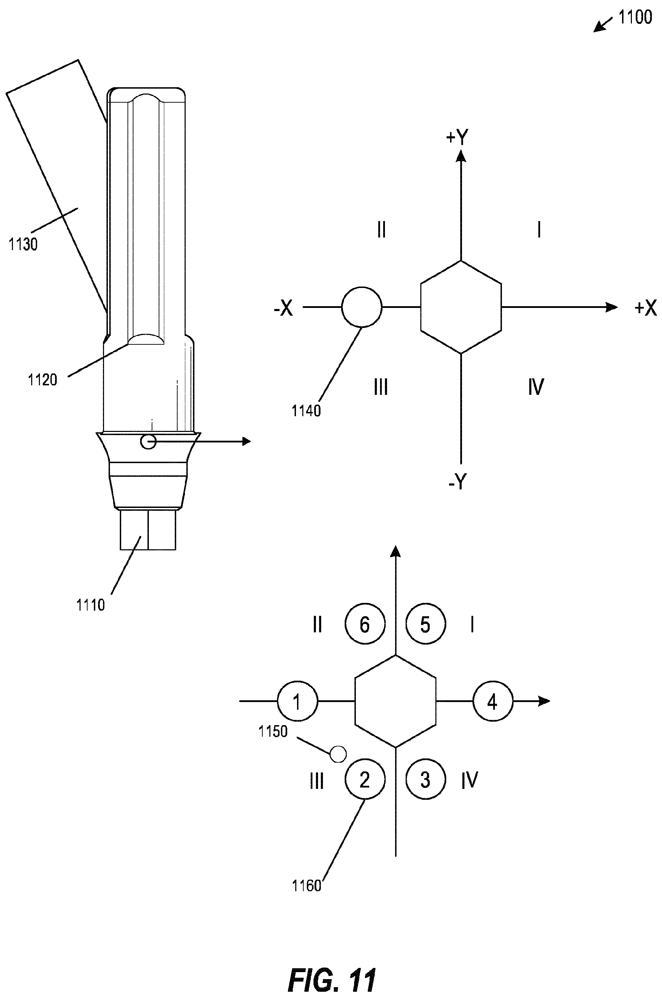

FIG. 11 illustrates a dental abutment angulated screw channel rotation 1100. Each dental abutment may have a hexagonal base 1110 (e.g., titanium base), a library support 1120 fixedly attached to the hexagonal base 1110, and a screw channel 1130 extending from and supported by the library support 1120. For installation of the dental abutment, the angulated screw channel is rotated to a certain position, such as to -X position 1140. In an example, the hexagonal base allows for orienting the screw channel in one of six different positions. The dental abutment may have an associated checkpoint 1150, and the angulated screw channel may need to be rotated at least through the checkpoint 1150 to secure the dental abutment. As shown in FIG. 11, the angulated screw channel may need to be rotated counterclockwise past the checkpoint 1150 to the second hexagonal position 1160 (e.g., hexagonal position 2) to secure the dental abutment. While FIG. 11 illustrates a two-piece abutment dental implant that may have a hexagonal base 1110, other embodiments may include an angulated screw channel that may be positioned freely around 360°. In various embodiments, a direct-screwed abutment (e.g., one-piece abutment) and some two-piece abutment designs may include the ability to be positioned freely around 360°.

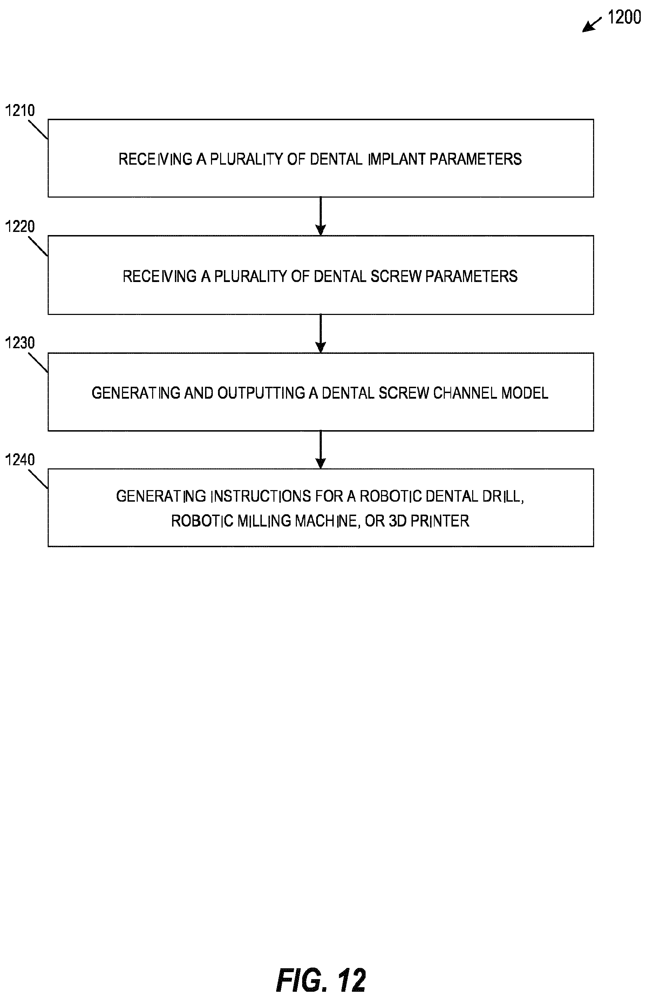

FIG. 12 illustrates a flow chart showing dental screw channel model technique 1200, in accordance with some embodiments. In an embodiment, technique 1200 includes receiving 1210 a plurality of dental abutment parameters, where the plurality of dental abutment parameters includes a screw channel length and a variable height. Technique 1200 further includes receiving 1220 a plurality of dental screw parameters associated with a dental screw type, where the plurality of dental screw parameters includes a screwhead diameter and a screwhead height. Technique 1200 further includes generating and outputting 1230 a dental screw channel model based on the plurality of dental abutment parameters and on the plurality of dental screw parameters. The dental screw channel model includes a dental abutment baseline geometry, a dental emergence geometry, a screwhead angulation geometry, and a screw channel exit geometry.

Technique 1200 may include generating 1240 instructions for a robotic dental abutment milling machine, for a robotic dental drill, or for a 3D printer based on the dental screw channel model. The plurality of dental abutment parameters may further include a screw channel type, the screw channel type including a conical screw channel or a parallel screw channel. The screwhead angulation geometry may include a non-ellipsoid long hole geometry. The non-ellipsoid long hole geometry may include a radius of curvature based on the screwhead diameter. The variable height may be selected based on a screw length associated with a dental screw, the screwhead diameter, and the screwhead height to minimize the non-ellipsoid long hole geometry.

In an example, the generation 1230 of the dental screw channel model may be further based on a received dental abutment base geometry. The dental screw channel model may further include a dental abutment rotation position, which may be based on a received dental abutment rotation checkpoint position. The dental abutment base geometry may include a n-sided polygon geometry. The dental abutment rotation position may include a first position on the n-sided polygon geometry following the dental abutment rotation checkpoint position.

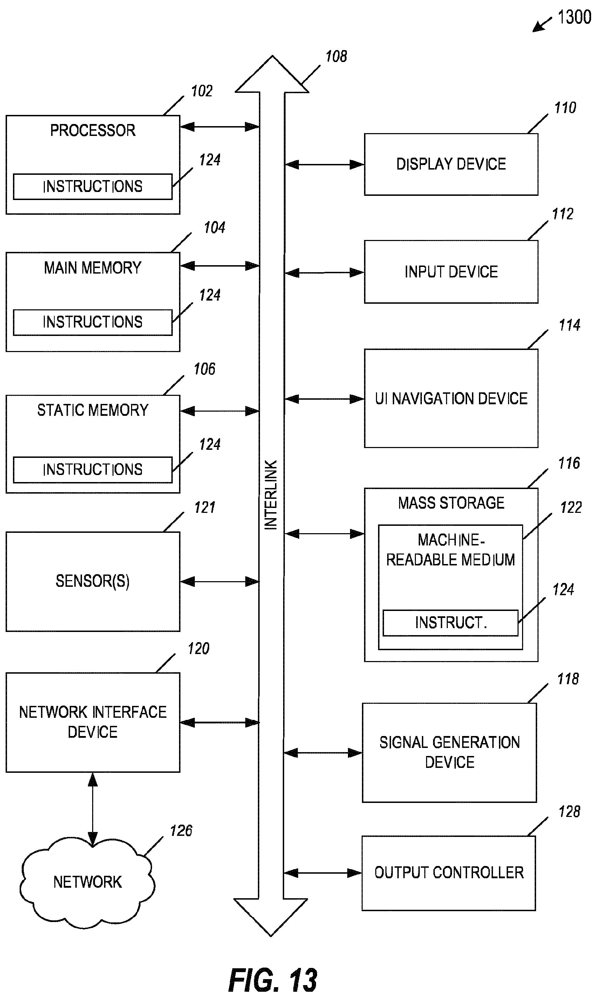

FIG. 13 illustrates generally an example of a block diagram of a machine 1300 upon which any one or more of the techniques (e.g., methodologies) discussed herein may perform in accordance with some embodiments. In alternative embodiments, the machine 1300 may operate as a standalone device or may be connected (e.g., networked) to other machines. In a networked deployment, the machine 1300 may operate in the capacity of a server machine, a client machine, or both in server-client network environments. The machine 1300 may be a personal computer (PC), a tablet PC, a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or like mechanisms. Such mechanisms are tangible entities (e.g., hardware) capable of performing specified operations when operating. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the executions units or a loading mechanism. Accordingly, the execution units are communicatively coupled to the computer readable medium when the device is operating. For example, under operation, the execution units may be configured by a first set of instructions to implement a first set of features at one point in time and reconfigured by a second set of instructions to implement a second set of features.

Machine (e.g., computer system) 1300 may include a hardware processor 1302 (e.g., a central processing unit (CPU), a graphics processing unit (GPU), a hardware processor core, or any combination thereof), a main memory 1304 and a static memory 1306, some or all of which may communicate with each other via an interlink (e.g., bus) 1308. The machine 1300 may further include a display unit 1310, an alphanumeric input device 1312 (e.g., a keyboard), and a user interface (UI) navigation device 1314 (e.g., a mouse). In an example, the display unit 1310, alphanumeric input device 1312 and UI navigation device 1314 may be a touch screen display. The display unit 1310 may include goggles, glasses, an augmented reality (AR) display, a virtual reality (VR) display, or another display component. For example, the display unit may be worn on a head of a user and may provide a heads-up-display to the user. The alphanumeric input device 1312 may include a virtual keyboard (e.g., a keyboard displayed virtually in a VR or AR setting.

The machine 1300 may additionally include a storage device (e.g., drive unit) 1316, a signal generation device 1318 (e.g., a speaker), a network interface device 1320, and one or more sensors 1321, such as a global positioning system (GPS) sensor, compass, accelerometer, or other sensor. The machine 1300 may include an output controller 1328, such as a serial (e.g., universal serial bus (USB), parallel, or other wired or wireless (e.g., infrared (IR), near field communication (NFC), etc.) connection to communicate or control one or more peripheral devices.

The storage device 1316 may include a machine readable medium 1322 that is non-transitory on which is stored one or more sets of data structures or instructions 1324 (e.g., software) embodying or utilized by any one or more of the techniques or functions described herein. The instructions 1324 may also reside, completely or at least partially, within the main memory 1304, within static memory 1306, or within the hardware processor 1302 during execution thereof by the machine 1300. In an example, one or any combination of the hardware processor 1302, the main memory 1304, the static memory 1306, or the storage device 1316 may constitute machine readable media.

While the machine readable medium 1322 is illustrated as a single medium, the term "machine readable medium" may include a single medium or multiple media (e.g., a centralized or distributed database, or associated caches and servers) configured to store the one or more instructions 1324.

The term "machine readable medium" may include any medium that is capable of storing, encoding, or carrying instructions for execution by the machine 1300 and that cause the machine 1300 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 1324 may further be transmitted or received over a communications network 1326 using a transmission medium via the network interface device 1320 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, as the personal area network family of standards known as Bluetooth^{®} that are promulgated by the Bluetooth Special Interest Group, peer-to-peer (P2P) networks, among others. In an example, the network interface device 1320 may include one or more physical jacks (e.g., Ethernet, coaxial, or phone jacks) or one or more antennas to connect to the communications network 1326. In an example, the network interface device 1320 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1300, and includes digital or analog communications signals or other intangible medium to facilitate communication of such software.

### Various Notes

The above detailed description includes references to the accompanying drawings, which form a part of the detailed description. The drawings show, by way of illustration, specific embodiments in which the invention can be practiced. In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document. These embodiments are also referred to herein as "examples." Such examples can include elements in addition to those shown or described. However, the present inventor also contemplates examples in which only those elements shown or described are provided. Moreover, the present inventor also contemplates examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above detailed description, various features may be grouped together to streamline the disclosure. This should not be interpreted as intending that an unclaimed disclosed feature is essential to any claim. The scope of the invention is determined by the appended claims.

## Claims

1. A method for generating an angulated dental screw channel model, the method comprising:
receiving (1210) a plurality of dental abutment parameters, the plurality of dental abutment parameters including a screw channel length and a screw channel variable height (310, 315, 450, 630);
receiving (1220) a plurality of dental screw parameters associated with a dental screw type, the plurality of dental screw parameters including a screwhead diameter (330, 335) and a screwhead height (320, 325); and
generating and outputting (1230) an angulated dental screw channel model based on the received plurality of dental abutment parameters and on the received plurality of dental screw parameters, the angulated dental screw channel model defining an angulated screw channel (300) without requiring an internal recess (225, 235) extending into a material of the dental abutment surrounding the angulated dental screw channel (300).

2. The method of claim 1, wherein the angulated dental screw channel model includes a dental abutment baseline geometry, a screw channel angulation geometry, and a screw channel exit geometry.

3. The method of claim 1 or 2, further including generating (1240) instructions for a robotic dental abutment milling machine based on the angulated dental screw channel model.

4. The method of any one of claims 1 to 3, further including generating (1240) instructions for a 3D printed model based on the angulated dental screw channel model.

5. The method of any one of claims 1 to 4, the plurality of dental abutment parameters further including a screw channel type, the screw channel type including a conical screw channel or a parallel screw channel.

6. The method of any one of claims 2 to 5, wherein the screw channel angulation geometry includes a non-ellipsoid long hole geometry, the non-ellipsoid long hole geometry including a radius of curvature (435) based on the screwhead diameter (330, 335).

7. The method of claim 6, wherein the screw channel variable height (310, 315, 450, 630) is selected based on a screw length associated with a dental screw, the screwhead diameter, and the screwhead height to minimize the non-ellipsoid long hole geometry.

8. The method of any one of claims 2 to 7, further including receiving a dental abutment base geometry (1110), wherein:
generating the angulated dental screw channel model is further based on the dental abutment base geometry; and
the angulated dental screw channel model further includes a dental abutment rotation position (1140, 1160) wherein the abutment base allows for orienting the screw channel different positions.

9. The method of claim 8, further including associating a dental abutment rotation checkpoin (1150) position, wherein:
the dental abutment base geometry includes a n-sided polygon geometry; and
the angulated screw channel rotation position includes a first position (1140) on the n-sided polygon geometry, wherein the angulated screw channel may be rotated at least through the checkpoint (1150) to secure the dental implant to a second position (1160).

10. A device for generating an angulated dental screw channel model, the device comprising:
a processor (1302); and
a memory device (1304, 1306) coupled to the processor and having a program stored thereon for execution by the processor to perform operations comprising:
receiving (1210) a plurality of dental abutment parameters, the plurality of dental abutment parameters including a screw channel length and a screw channel variable height (310, 315, 450, 630);
receiving (1220) a plurality of dental screw parameters associated with a dental screw type, the plurality of dental screw parameters including a screwhead diameter (330, 335) and a screwhead height (320, 325); and
generating and outputting (1230) an angulated dental screw channel model based on the received plurality of dental abutment parameters and on the received plurality of dental screw parameters, the angulated dental screw channel model defining an angulated screw channel (300) without requiring an internal recess (225, 235) extending into a material of the dental abutment surrounding the angulated dental screw channel (300).

11. The device of claim 10, wherein the angulated dental screw channel model includes a dental abutment baseline geometry, a screw channel angulation geometry, and a screw channel exit geometry.

12. The device of claim 10 or 11, the operations further including causing a robotic dental abutment milling machine to mill a dental screw channel based on the angulated dental screw channel model.

13. The device of any one of claims 10 to 12, the operations further including causing a 3D printer to form a dental abutment with an internal dental screw channel based on the angulated dental screw channel model.

14. The device of claim 11, wherein the screw channel angulation geometry includes a non-ellipsoid long hole geometry, the non-ellipsoid long hole geometry including a radius of curvature (435) based on the screwhead diameter (330, 335).

15. The device of any one of claims 11 to 14, wherein the screw channel variable height (310, 315, 450, 630) is selected based on a screw length associated with a dental screw, the screwhead diameter, and the screwhead height to minimize the non-ellipsoid long hole geometry.

16. The device of any one of claims 11 to 15, the operations further including receiving a dental abutment base geometry, wherein:
generating the angulated dental screw channel model is further based on the dental abutment base geometry; and
the angulated dental screw channel model further includes a dental abutment rotation position (1140, 1160) wherein the abutment base allows for orienting the screw channel different positions.

17. The device of claim 16, the operations further including associating a dental abutment rotation checkpoint (1150) position, wherein:
the dental abutment base geometry includes a n-sided polygon geometry; and
the angulated screw channel rotation position includes a first position (1140) on the n-sided polygon geometry, wherein the angulated screw channel may be rotated at least through the checkpoint (1150) to secure the dental implant to a second position (1160).

18. A non-transitory computer-readable storage medium comprising one or more programs for execution by one or more processors (1302) of a device, the one or more programs including instructions which, when executed by the one or more processors, cause the device to:
receive (1210) a plurality of dental abutment parameters, the plurality of dental abutment parameters including a screw channel length and a screw channel variable height (310, 315, 450, 630);
receive (1220) a plurality of dental screw parameters associated with a dental screw type, the plurality of dental screw parameters including a screwhead diameter (330, 335) and a screwhead height (320, 325); and
generate and output (1230) an angulated dental screw channel model based on the received plurality of dental abutment parameters and on the received plurality of dental screw parameters, the angulated dental screw channel model defining an angulated screw channel (300) without requiring an internal recess (225, 235) extending into a material of the dental abutment surrounding the angulated dental screw channel (300).

19. The non-transitory computer-readable storage medium of claim 18, wherein the angulated dental screw channel model includes a dental abutment baseline geometry, a screw channel angulation geometry, and a screw channel exit geometry.

20. The non-transitory computer-readable storage medium of claim 19, wherein the screw channel angulation geometry includes a non-ellipsoid long hole geometry, the non-ellipsoid long hole geometry including a radius of curvature (435) based on the screwhead diameter (330, 335).

## Patentansprüche

1. Verfahren zum Erzeugen eines angewinkelten Zahnschraubenkanalmodells, wobei das Verfahren Folgendes umfasst:
Empfangen (1210) einer Vielzahl von Zahnabutmentsparametern, wobei die Vielzahl von Zahnabutmentsparametern eine Schraubenkanallänge und eine variable Schraubenkanalhöhe (310, 315, 450, 630) beinhaltet;
Empfangen (1220) einer Vielzahl von Zahnschraubenparametern, die einem Zahnschraubentyp zugeordnet sind, wobei die Vielzahl von Zahnschraubenparametern einen Schraubenkopfdurchmesser (330, 335) und eine Schraubenkopfhöhe (320, 325) beinhaltet; und
Erzeugen und Ausgeben (1230) eines angewinkelten Zahnschraubenkanalmodells basierend auf der empfangenen Vielzahl von Zahnabutmentsparametern und auf der empfangenen Vielzahl von Zahnschraubenparametern, wobei das angewinkelte Zahnschraubenkanalmodell einen angewinkelten Schraubenkanal (300) definiert, ohne dass eine innere Aussparung (225, 235) erforderlich ist, die sich in ein Material des Zahnabutments erstreckt, das den angewinkelten Zahnschraubenkanal (300) umgibt.

2. Verfahren nach Anspruch 1, wobei das angewinkelte Zahnschraubenkanalmodell eine Zahnabutmentsbasisliniengeometrie, eine Schraubenkanalanwinkelungsgeometrie und eine Schraubenkanalaustrittsgeometrie beinhaltet.

3. Verfahren nach Anspruch 1 oder 2, ferner beinhaltend das Erzeugen (1240) von Anweisungen für eine robotische Zahnabutmentsfräsmaschine basierend auf dem angewinkelten Zahnschraubenkanalmodell.

4. Verfahren nach einem der Ansprüche 1 bis 3, ferner beinhaltend das Erzeugen (1240) von Anweisungen für ein 3D-gedrucktes Modell basierend auf dem angewinkelten Zahnschraubenkanalmodell.

5. Verfahren nach einem der Ansprüche 1 bis 4, wobei die Vielzahl von Zahnabutmentsparametern ferner einen Schraubenkanaltyp beinhaltet, wobei der Schraubenkanaltyp einen konischen Schraubenkanal oder einen parallelen Schraubenkanal beinhaltet.

6. Verfahren nach einem der Ansprüche 2 bis 5, wobei die Schraubenkanalanwinkelungsgeometrie eine nicht-ellipsoide Langlochgeometrie beinhaltet, wobei die nicht-ellipsoide Langlochgeometrie Folgendes beinhaltet:
einen Krümmungsradius (435) basierend auf dem Schraubenkopfdurchmesser (330, 335).

7. Verfahren nach Anspruch 6, wobei die variable Schraubenkanalhöhe (310, 315, 450, 630) basierend auf einer Schraubenlänge, die einer Zahnschraube zugeordnet ist, dem Schraubenkopfdurchmesser und der Schraubenkopfhöhe ausgewählt wird, um die nicht-ellipsoide Langlochgeometrie zu minimieren.

8. Verfahren nach einem der Ansprüche 2 bis 7, ferner beinhaltend das Empfangen einer Zahnabutmentsbasisgeometrie (1110), wobei:
das Erzeugen des angewinkelten Zahnschraubenkanalmodells ferner auf der Zahnimplantatgeometrie basiert; und
das angewinkelte Zahnschraubenkanalmodell ferner eine Zahnabutmentsrotationsposition (1140, 1160) beinhaltet, wobei die Abutmentsbasis das Ausrichten der unterschiedlichen Schraubenkanalpositionen ermöglicht.

9. Verfahren nach Anspruch 8, ferner beinhaltend das Zuordnen einer Zahnabutmentsrotationsprüfpunktposition (1150), wobei:
die Zahnabutmentsbasisgeometrie eine n-seitige Polygongeometrie beinhaltet; und
die angewinkelte Schraubenkanalrotationsposition eine erste Position (1140) auf der n-seitigen Polygongeometrie beinhaltet, wobei der angewinkelte Schraubenkanal mindestens durch den Prüfpunkt (1150) gedreht werden kann, um das Zahnimplantat in einer zweiten Position (1160) zu sichern.

10. Vorrichtung zum Erzeugen eines angewinkelten Zahnschraubenkanalmodells, wobei die Vorrichtung Folgendes umfasst:
einen Prozessor (1302); und
eine Speichervorrichtung (1304, 1306), die mit dem Prozessor gekoppelt ist und ein darauf gespeichertes Programm zur Ausführung durch den Prozessor aufweist, um Vorgänge durchzuführen, die Folgendes umfassen:
Empfangen (1210) einer Vielzahl von Zahnabutmentsparametern, wobei die Vielzahl von Zahnabutmentsparametern eine Schraubenkanallänge und eine variable Schraubenkanalhöhe (310, 315, 450, 630) beinhaltet;
Empfangen (1220) einer Vielzahl von Zahnschraubenparametern, die einem Zahnschraubentyp zugeordnet sind, wobei die Vielzahl von Zahnschraubenparametern einen Schraubenkopfdurchmesser (330, 335) und eine Schraubenkopfhöhe (320, 325) beinhaltet; und
Erzeugen und Ausgeben (1230) eines angewinkelten Zahnschraubenkanalmodells basierend auf der empfangenen Vielzahl von Zahnabutmentsparametern und auf der empfangenen Vielzahl von Zahnschraubenparametern, wobei das angewinkelte Zahnschraubenkanalmodell einen angewinkelten Schraubenkanal (300) definiert, ohne dass eine innere Aussparung (225, 235) erforderlich ist, die sich in ein Material des Zahnabutments erstreckt, das den angewinkelten Zahnschraubenkanal (300) umgibt.

11. Vorrichtung nach Anspruch 10, wobei das angewinkelte Zahnschraubenkanalmodell eine Zahnabutmentsbasisliniengeometrie, eine Schraubenkanalanwinkelungsgeometrie und eine Schraubenkanalaustrittsgeometrie beinhaltet.

12. Vorrichtung nach Anspruch 10 oder 11, wobei die Vorgänge ferner das Veranlassen einer robotischen Zahnabutmentsfräsmaschine beinhalten, einen Zahnschraubenkanal basierend auf dem angewinkelten Zahnschraubenkanalmodell zu fräsen.

13. Vorrichtung nach einem der Ansprüche 10 bis 12, wobei die Vorgänge ferner das Veranlassen eines 3D-Druckers beinhalten, ein Zahnabutment mit einem inneren Zahnschraubenkanal basierend auf dem angewinkelten Zahnschraubenkanalmodell zu bilden.

14. Vorrichtung nach Anspruch 11, wobei die Schraubenkanalanwinkelungsgeometrie eine nicht-ellipsoide Langlochgeometrie beinhaltet, wobei die nicht-ellipsoide Langlochgeometrie einen Krümmungsradius (435) basierend auf dem Schraubenkopfdurchmesser (330, 335) beinhaltet.

15. Vorrichtung nach einem der Ansprüche 11 bis 14, wobei die variable Schraubenkanalhöhe (310, 315, 450, 630) basierend auf einer Schraubenlänge, die einer Zahnschraube zugeordnet ist, dem Schraubenkopfdurchmesser und der Schraubenkopfhöhe ausgewählt wird, um die nicht-ellipsoide Langlochgeometrie zu minimieren.

16. Vorrichtung nach einem der Ansprüche 11 bis 15, wobei die Vorgänge ferner das Empfangen einer Zahnabutmentsbasisgeometrie beinhalten, wobei:
das Erzeugen des angewinkelten Zahnschraubenkanalmodells ferner auf der Zahnabutmentsbasisgeometrie basiert; und
das angewinkelte Zahnschraubenkanalmodell ferner eine Zahnabutmentsrotationsposition (1140, 1160) beinhaltet, wobei die Abutmentsbasis das Ausrichten der unterschiedlichen Schraubenkanalpositionen ermöglicht.

17. Vorrichtung nach Anspruch 16, wobei die Vorgänge ferner das Zuordnen einer Zahnabutmentsrotationsprüfpunktposition (1150) beinhalten, wobei:
die Zahnabutmentsbasisgeometrie eine n-seitige Polygongeometrie beinhaltet; und
die angewinkelte Schraubenkanalrotationsposition eine erste Position (1140) auf der n-seitigen Polygongeometrie beinhaltet, wobei der angewinkelte Schraubenkanal mindestens durch den Prüfpunkt (1150) gedreht werden kann, um das Zahnimplantat in einer zweiten Position (1160) zu sichern.

18. Nichtflüchtiges computerlesbares Speichermedium, das ein oder mehrere Programme zur Ausführung durch einen oder mehrere Prozessoren (1302) einer Vorrichtung umfasst, wobei das eine oder die mehreren Programme Anweisungen beinhalten, die bei Ausführung durch den einen oder die mehreren Prozessoren die Vorrichtung zu Folgendem veranlassen:
Empfangen (1210) einer Vielzahl von Zahnabutmentsparametern, wobei die Vielzahl von Zahnabutmentsparametern eine Schraubenkanallänge und eine variable Schraubenkanalhöhe (310, 315, 450, 630) beinhaltet;
Empfangen (1220) einer Vielzahl von Zahnschraubenparametern, die einem Zahnschraubentyp zugeordnet sind, wobei die Vielzahl von Zahnschraubenparametern einen Schraubenkopfdurchmesser (330, 335) und eine Schraubenkopfhöhe (320, 325) beinhaltet; und
Erzeugen und Ausgeben (1230) eines angewinkelten Zahnschraubenkanalmodells basierend auf der empfangenen Vielzahl von Zahnabutmentsparametern und auf der empfangenen Vielzahl von Zahnschraubenparametern, wobei das angewinkelte Zahnschraubenkanalmodell einen angewinkelten Schraubenkanal (300) definiert, ohne dass eine innere Aussparung (225, 235) erforderlich ist, die sich in ein Material des Zahnabutments erstreckt, das den angewinkelten Zahnschraubenkanal (300) umgibt.

19. Nichtflüchtiges computerlesbares Speichermedium nach Anspruch 18, wobei das angewinkelte Zahnschraubenkanalmodell eine Zahnabutmentsbasisliniengeometrie, eine Schraubenkanalanwinkelungsgeometrie und eine Schraubenkanalaustrittsgeometrie beinhaltet.

20. Nichtflüchtiges computerlesbares Speichermedium nach Anspruch 19, wobei die Schraubenkanalanwinkelungsgeometrie eine nicht-ellipsoide Langlochgeometrie beinhaltet, wobei die nicht-ellipsoide Langlochgeometrie einen Krümmungsradius (435) basierend auf dem Schraubenkopfdurchmesser (330, 335) beinhaltet.

## Revendications

1. Procédé de génération d'un modèle de canal de vis dentaire angulé, le procédé comprenant :
la réception (1210) d'une pluralité de paramètres de pilier dentaire, la pluralité de paramètres de pilier dentaire incluant une longueur de canal de vis et une hauteur variable de canal de vis (310, 315, 450, 630) ;
la réception (1220) d'une pluralité de paramètres de vis dentaire associés à un type de vis dentaire, la pluralité de paramètres de vis dentaire incluant un diamètre de tête de vis (330, 335) et une hauteur de tête de vis (320, 325) ; et
la génération et la sortie (1230) d'un modèle de canal de vis dentaire angulé sur la base de la pluralité reçue de paramètres de pilier dentaire et sur la base de la pluralité reçue de paramètres de vis dentaire, le modèle de canal de vis dentaire angulé définissant un canal de vis angulé (300) sans nécessiter un évidement interne (225, 235) s'étendant dans un matériau du pilier dentaire entourant le canal de vis dentaire angulé (300).

2. Procédé selon la revendication 1, dans lequel le modèle de canal de vis dentaire angulé inclut une géométrie de ligne de base de pilier dentaire, une géométrie d'angulation de canal de vis, et une géométrie de sortie de canal de vis.

3. Procédé selon la revendication 1 ou 2, incluant en outre la génération (1240) d'instructions pour une fraiseuse de pilier dentaire robotisée sur la base du modèle de canal de vis dentaire angulé.

4. Procédé selon l'une quelconque des revendications 1 à 3, incluant en outre la génération (1240) d'instructions pour un modèle imprimé 3D sur la base du modèle de canal de vis dentaire angulé.

5. Procédé selon l'une quelconque des revendications 1 à 4, la pluralité de paramètres de pilier dentaire incluant en outre un type de canal de vis, le type de canal de vis incluant un canal de vis conique ou un canal de vis parallèle.

6. Procédé selon l'une quelconque des revendications 2 à 5, dans lequel la géométrie d'angulation de canal de vis inclut une géométrie de trou long non ellipsoïdale, la géométrie de trou long non ellipsoïdale incluant un diamètre de trou long non ellipsoïdal, et
un rayon de courbure (435) basé sur le diamètre de tête de vis (330, 335).

7. Procédé selon la revendication 6, dans lequel la hauteur variable de canal de vis (310, 315, 450, 630) est sélectionnée sur la base d'une longueur de vis associée à une vis dentaire, du diamètre de tête de vis, et de la hauteur de tête de vis pour minimiser la géométrie de trou long non ellipsoïdale.

8. Procédé selon l'une quelconque des revendications 2 à 7, incluant en outre la réception d'une géométrie de base de pilier dentaire (1110), dans lequel :
la génération du modèle de canal de vis dentaire angulé est en outre basée sur la géométrie d'implant dentaire ; et
le modèle de canal de vis dentaire angulé inclut en outre une position de rotation de pilier dentaire (1140, 1160, dans lequel la base de pilier permet d'orienter les différentes positions de canal de vis.

9. Procédé selon la revendication 8, incluant en outre l'association d'une position de point de contrôle de rotation de pilier dentaire (1150), dans lequel :
la géométrie de base de pilier dentaire inclut une géométrie de polygone à n côtés ; et
la position de rotation de canal de vis angulé inclut une première position (1140) sur la géométrie de polygone à n côtés, dans lequel le canal de vis angulé peut être tourné au moins à travers le point de contrôle (1150) pour fixer l'implant dentaire à une seconde position (1160).

10. Dispositif de génération d'un modèle de canal de vis dentaire angulé, le dispositif comprenant :
un processeur (1302) ; et
un dispositif de mémoire (1304, 1306) couplé au processeur et ayant un programme stocké sur celui-ci pour exécution par le processeur pour effectuer des opérations comprenant :
la réception (1210) d'une pluralité de paramètres de pilier dentaire, la pluralité de paramètres de pilier dentaire incluant une longueur de canal de vis et une hauteur variable de canal de vis (310, 315, 450, 630) ;
la réception (1220) d'une pluralité de paramètres de vis dentaire associés à un type de vis dentaire, la pluralité de paramètres de vis dentaire incluant un diamètre de tête de vis (330, 335) et une hauteur de tête de vis (320, 325) ; et
la génération et la sortie (1230) d'un modèle de canal de vis dentaire angulé sur la base de la pluralité reçue de paramètres de pilier dentaire et sur la base de la pluralité reçue de paramètres de vis dentaire, le modèle de canal de vis dentaire angulé définissant un canal de vis angulé (300) sans nécessiter un évidement interne (225, 235) s'étendant dans un matériau du pilier dentaire entourant le canal de vis dentaire angulé (300).

11. Dispositif selon la revendication 10, dans lequel le modèle de canal de vis dentaire angulé inclut une géométrie de ligne de base de pilier dentaire, une géométrie d'angulation de canal de vis, et une géométrie de sortie de canal de vis.

12. Dispositif selon la revendication 10 ou 11, les opérations incluant en outre le fait d'amener une fraiseuse de pilier dentaire robotisée à fraiser un canal de vis dentaire sur la base du modèle de canal de vis dentaire angulé.

13. Dispositif selon l'une quelconque des revendications 10 à 12, les opérations incluant en outre le fait d'amener une imprimante 3D à former un pilier dentaire avec un canal de vis dentaire interne sur la base du modèle de canal de vis dentaire angulé.

14. Dispositif selon la revendication 11, dans lequel la géométrie d'angulation de canal de vis inclut une géométrie de trou long non ellipsoïdale, la géométrie de trou long non ellipsoïdale incluant un rayon de courbure (435) basé sur le diamètre de tête de vis (330, 335).

15. Dispositif selon l'une quelconque des revendications 11 à 14, dans lequel la hauteur variable de canal de vis (310, 315, 450, 630) est sélectionnée sur la base d'une longueur de vis associée à une vis dentaire, du diamètre de tête de vis, et de la hauteur de tête de vis pour minimiser la géométrie de trou long non ellipsoïdale.

16. Dispositif selon l'une quelconque des revendications 11 à 15, les opérations incluant en outre la réception d'une géométrie de base de pilier dentaire, dans lequel :
la génération du modèle de canal de vis dentaire angulé est en outre basée sur la géométrie de base de pilier dentaire ; et
le modèle de canal de vis dentaire angulé inclut en outre une position de rotation de pilier dentaire (1140, 1160) dans lequel la base de pilier permet d'orienter les différentes positions de canal de vis.

17. Dispositif selon la revendication 16, les opérations incluant en outre l'association d'une position de point de contrôle de rotation de pilier dentaire (1150), dans lequel :
la géométrie de base de pilier dentaire inclut une géométrie de polygone à n côtés ; et
la position de rotation de canal de vis angulé inclut une première position (1140) sur la géométrie de polygone à n côtés, dans lequel le canal de vis angulé peut être tourné au moins à travers le point de contrôle (1150) pour fixer l'implant dentaire à une seconde position (1160).

18. Support de stockage non transitoire lisible par ordinateur comprenant un ou plusieurs programmes pour exécution par un ou plusieurs processeurs (1302) d'un dispositif, les un ou plusieurs programmes incluant des instructions qui, lorsqu'elles sont exécutées par les un ou plusieurs processeurs, amènent le dispositif à :
recevoir (1210) une pluralité de paramètres de pilier dentaire, la pluralité de paramètres de pilier dentaire incluant une longueur de canal de vis et une hauteur variable de canal de vis (310, 315, 450, 630) ;
recevoir (1220) une pluralité de paramètres de vis dentaire associés à un type de vis dentaire, la pluralité de paramètres de vis dentaire incluant un diamètre de tête de vis (330, 335) et une hauteur de tête de vis (320, 325) ; et
générer et sortir (1230) un modèle de canal de vis dentaire angulé sur la base de la pluralité reçue de paramètres de pilier dentaire et sur la base de la pluralité reçue de paramètres de vis dentaire, le modèle de canal de vis dentaire angulé définissant un canal de vis angulé (300) sans nécessiter un évidement interne (225, 235) s'étendant dans un matériau du pilier dentaire entourant le canal de vis dentaire angulé (300).

19. Support de stockage non transitoire lisible par ordinateur selon la revendication 18, dans lequel le modèle de canal de vis dentaire angulé inclut une géométrie de ligne de base de pilier dentaire, une géométrie d'angulation de canal de vis, et une géométrie de sortie de canal de vis.

20. Support de stockage non transitoire lisible par ordinateur selon la revendication 19, dans lequel la géométrie d'angulation de canal de vis inclut une géométrie de trou long non ellipsoïdale, la géométrie de trou long non ellipsoïdale incluant un rayon de courbure (435) basé sur le diamètre de tête de vis (330, 335).
